(19) Europäisches Patentamt

European Patent Office

Office européen des brevets

(11) **EP 1 167 616 A1**

(12) **EUROPEAN PATENT APPLICATION**
published in accordance with Art. 158(3) EPC

(43) Date of publication:
02.01.2002 Bulletin 2002/01

(51) Int Cl.⁷: **D06M 13/144**

(21) Application number: 00905407.3

(86) International application number:
**PCT/JP00/01170**

(22) Date of filing: 29.02.2000

(87) International publication number:
**WO 00/52251 (08.09.2000 Gazette 2000/36)**

(84) Designated Contracting States:
**AT BE CH CY DE DK ES FI FR GB GR IE IT LI LU MC NL PT SE**

(30) Priority: 04.03.1999 JP 5710099

(71) Applicant: Daikin Industries, Ltd.
Osaka-shi, Osaka 530-8323 (JP)

(72) Inventors:
• **SATO, Kazuyuki,**
Yodogawa Works of Daikin Ind. Ltd.
Settsu-shi, Osaka 566-8585 (JP)

• **MORITA, Masamichi**
Settsu-shi, Osaka 566-8585 (JP)
• **YAMAGUCHI, Fumihiko**
Settsu-shi, Osaka 566-8585 (JP)
• **KUBO, Motonobu,**
Yodogawa Works of Daikin Ind. Ltd.
Settsu-shi, Osaka 566-8585 (JP)

(74) Representative: **HOFFMANN - EITLE**
**Patent- und Rechtsanwälte Arabellastrasse 4**
**81925 München (DE)**

(54) **SURFACE-TREATING AGENT COMPRISING INORGANIC/ORGANIC HYBRID MATERIAL**

(57)    A surface treatment agent is provided wherein, when a fiber for carpet is treated with the surface treatment agent, the treated fiber has characteristics of (1) a stain block property of at least 8, in the stain block examination according to AATCC-TM-175-1993, and (2) a Knoop hardness (KH) of the surface treatment agent of at least 5. A surface treatment agent comprising (A) a metal alkoxide, (B) a fluorine-containing compound having functional group reactive with the metal alkoxide and (C) a reactive group-containing polymer having a reactive group reactive with a substrate to be treated is also provided.

Printed by Jouve, 75001 PARIS (FR)

**Description**

FIELD OF THE INVENTION

The present invention relates to a surface treatment agent comprising an organic-inorganic hybrid material to impart a superior stain block property to a substrate to be treated, such as a textile.

BACKGROUND OF INVENTION

Conventionally, various soil release treatment agents are suggested in order to impart water repellency, oil repellency and soil releasability to textiles (for example, carpets). USP 4,925,906, USP 5,015,259 and USP 5,223,340 disclose that soil release treatment agents comprising a copolymer containing carboxylic acid provide water repellency, oil repellency and soil releasability. Although water repellency and oil repellency after cleaning are maintained using these copolymers, stain block property and soil releasability are not sufficiently maintained.

SUMMARY OF INVENTION

An object of the present invention is to provide a treatment agent which imparts durability maintaining sufficient water repellency, oil repellency, stain block property, and soil releasability before and after cleaning.

The present invention provides a surface treatment agent, wherein, when a fiber for carpet is treated with the surface treatment agent, the treated fiber has following characteristics (1) and (2):

(1) a stain block property of at least 8, in the stain block examination according to AATCC-TM-175-1993;
(2) a Knoop hardness (KH) of the surface treatment agent of at least 5.

The present invention provides a surface treatment agent comprising;

(A) a metal alkoxide,
(B) a fluorine-containing compound having a functional group reactive with the metal alkoxide,
and
(C) a reactive group-containing polymer having a reactive group reactive with a substrate to be treated.

Furthermore, the present invention provides a composition for an organic-inorganic hybrid material comprising:

(A) a metal alkoxide,
(B) a fluorine-containing compound having a functional group reactive with the metal alkoxide,
(C) a reactive group-containing polymer having a reactive group reactive with a substrate to be treated.

DETAILED DESCRIPTION OF THE INVENTION

The metal alkoxide (A) is hydrolysis polymerizing organometallic compound and has at least one alkoxy group. The metal alkoxide (A) may be a compound represented, for example, by the general formula:

$$R^{11}{}_a(R^{12}O)_bM\{O\text{-}MR^{11}{}_g(OR^{12})_h\}_f\text{-}R^{11}{}_d(OR^{12})_e$$

wherein each $R^{11}$ represents a methacryloxy group, an acryloxy group, a vinyl group-containing organic group, an alkyl group, a vinyl group, an aryl group or an epoxy group-containing organic group, and each $R^{12}$ represents an alkyl group, an alkoxyalkyl group or an aryl group, and a is from 0 to 3, b is from 0 to 4, a+b = 2 to 4, d is 1 or 0, e is 1 or 0, d+e = 1, f is from 0 to 10, for example, from 0 to 4, g is from 0 to 3, h is from 0 to 3, g+h = 1 to 3, and at least one from b, e and h is at least 1.

The metal alkoxide (A) may be a compound represented, for example, by the general formula:

$$(R^{11})_nM(OR^{12})_m$$

wherein $R^{11}$ represents a methacryloxy group, an acryloxy group, a vinyl group-containing organic group, an alkyl group, a vinyl group, an aryl group or an epoxy group-containing organic group, $R^{12}$ represents an alkyl group, an alkoxyalkyl group or an aryl group, and m is from 2 to 5, in particular 3 or 4, n is from 0 to 2, in particular 0 or 1, m+n = 3 to 5, in particular 4.

The number of alkoxy groups in the metal alkoxide (A) may be from 1 to 12, for example from 1 to 4.

The number of carbon atoms in the alkyl group ($R^{11}$ and $R^{12}$) is, for example, from 1 to 6. The number of carbon atoms in the aryl group is, for example, from 6 to 18. The number of carbon atoms in the vinyl group-containing organic group and the epoxy group-containing organic group is, for example, from 2 to 6. Example of the vinyl group-containing organic group is an vinyl group. Example of the epoxy group-containing organic group is a glycidyl group. In the alkoxyalkyl group, the number of carbon atoms in the alkoxy group may be from 1 to 6, for example, and the number of carbon atoms in the alkyl group may be from 1 to 6. As examples of M (metal), silicon (Si), titanium (Ti), aluminium (Al), zirconium (Zr), tin (Sn) and iron (Fe) are mentioned.

As examples of the metal alkoxide (A),

tetraethoxysilane [$Si(OCH_2CH_3)_4$] (functionality of 4),
methyltriethoxysilane [$CH_3Si(OCH_2CH_3)_3$] (functionality of 3), dimethyldiethoxysilane [$(CH_3)_2Si(OCH_2CH_3)_2$] (functionality of 2),
trimethylethoxysilane [$(CH_3)_3SiOCH_2CH_3$] (functionality of 1), and
ethoxysiloxane oligomer

$$[(CH_3CH_2O)_3Si\text{-}\{O\text{-}Si(OCH_2CH_3)_2\}_n\text{-}(OCH_2CH_3)]$$

(n = 1 ~ 4) (functionality of 6 to 12)
are mentioned.

The fluorine-containing compound (B) having functional group reactive with the metal alkoxide may be, for example,

Rf-X

wherein Rf represents a fluoroalkyl group, X represents a reactive group selected from the group consisting of a carboxyl group or a sulfonic acid group or a salt thereof, a hydroxy group, an epoxy group, a phosphoric group, an alkoxysilane group, a halogenated silyl group, an isocyanate group and a blocked isocyanate group.

The number of carbon atoms in the Rf group may be from 3 to 21, in particular, from 7 to 17. The Rf group (fluoroalkyl group) may be $CF_3(CF_2)_nCH_2CH_2$- (n ≥ 0).

The fluorine-containing compound (B) may be, in particular, Rf-OH or Rf-Si$(OR^{21})_3$, wherein each $R^{21}$ is independently a $C_{1\text{-}20}$ alkyl group.

The fluorine-containing compound (B) may be silane, alcohol, chlorosilane, epoxy and phosphoric ester.

As examples of the fluorine-containing compound (B),

2-perfluorooctylethyltriethoxysilane [$CF_3CF_2(CF_2CF_2)_3CH_2CH_2\text{-}Si(OCH_2CH_3)_3$],
2-perfluorodecylethyltriethoxysilane [$CF_3CF_2(CF_2CF_2)_4CH_2CH_2\text{-}Si(OCH_2CH_3)_3$],
2-perfluorododecylethyltriethoxysilane [$CF_3CF_2(CF_2CF_2)_5CH_2CH_2\text{-}Si(OCH_2CH_3)_3$],
2-perfluorotetradecylethyltriethoxysilane [$CF_3CF_2(CF_2CF_2)_6CH_2CH_2\text{-}Si(OCH_2CH_3)_3$],
2-perfluorooctylethanol [$CF_3CF_2(CF_2CF_2)_3CH_2CH_2OH$],
2-perfluorodecylethanol [$CF_3CF_2(CF_2CF_2)_4CH_2CH_2OH$],
2-perfluorododecylethanol [$CF_3CF_2(CF_2CF_2)_5CH_2CH_2OH$],
2-perfluorotetradecylethanol [$CF_3CF_2(CF_2CF_2)_6CH_2CH_2OH$],
2-perfluorooctylethyltrichlorosilane [$CF_3CF_2(CF_2CF_2)_3CH_2CH_2\text{-}SiCl_3$],
2-perfluorodecylethyltrichlorosilane [$CF_3CF_2(CF_2CF_2)_4CH_2CH_2\text{-}SiCl_3$],
2-perfluorododecylethyltrichlorosilane [$CF_3CF_2(CF_2CF_2)_5CH_2CH_2\text{-}SiCl_3$],
2-perfluorotetradecylethyltrichlorosilane [$CF_3CF_2(CF_2CF_2)_6CH_2CH_2\text{-}SiCl_3$],
3-perfluorooctyl-1,2-epoxypropane [$CF_3CF_2(CF_2CF_2)_3$-Gly],
3-perfluorodecyl-1,2-epoxypropane [$CF_3CF_2(CF_2CF_2)_4$-Gly],
3-perfluorododecyl-1,2-epoxypropane [$CF_3CF_2(CF_2CF_2)_5$-Gly],
3-perfluorotetradecyl-1,2-epoxypropane [$CF_3CF_2(CF_2CF_2)_6$-Gly],
(Gly is a glycidyl group.)

2-perfluorooctylethylphosphate [CF$_3$CF$_2$(CF$_2$CF$_2$)$_3$-CH$_2$CH$_2$O}$_m$-PO-(OH)$_{3-m}$],
2-perfluorodecylethylphosphate [CF$_3$CF$_2$(CF$_2$CF$_2$)$_4$-CH$_2$CH$_2$O}$_m$-PO-(OH)$_{3-m}$],
2-perfluorododecylethylphosphate [CF$_3$CF$_2$(CF$_2$CF$_2$)$_5$-CH$_2$CH$_2$O}$_m$-PO-(OH)$_{3-m}$], and
2-perfluorotetradecylethylphosphate [CF$_3$CF$_2$(CF$_2$CF$_2$)$_6$-CH$_2$CH$_2$O}$_m$-PO-(OH)$_{3-m}$],
          (m = 1 ∼ 3)

are mentioned.

The amount of the fluorine-containing compound (B) may be from 0.1 to 50 parts by weight, for example, from 1.0 to 5.0 parts by weight, based on 100 parts by weight of the metal alkoxide (A).

The reactive group-containing polymer (C) having reactive group reactive with substrate is preferably a polymer which is obtained from a monomer having a carbon-carbon double bond and a reactive group. The reactive group in the reactive group-containing polymer (C) may be selected from the group consisting of a carboxyl group or a salt thereof, a hydroxy group, an epoxy group, a phosphoric group, an alkoxysilane group, an imine group, a sulfonic group, an amino group, an isocyanate group and a blocked isocyanate group. The reactive group may be, in particular, a carboxyl group or a sulfonic group or a salt thereof. A monomer constituting the reactive group-containing polymer may be a monomer in which the reactive group bonds to one carbon atom constituting the carbon-carbon double bond. As examples of the monomer constituting the reactive group-containing polymer, acrylic acid, methacrylic acid, maleic acid, fumaric acid, citraconic acid, itaconic acid, styrenesulfonic acid and a sodium salt thereof are mentioned.

The reactive group-containing polymer (C) may be a hydroxy aromatic sulfonic acid or a condensate of carboxylic acid and formaldehyde.

The reactive group-containing polymer (C) can act as a stain block agent.

The amount of reactive group-containing polymer (C) may be from 0.001 to 10 parts by weight, for example, from 0.25 to 1.0 parts by weight, based on 100 parts by weight of the metal alkoxide (A).

The organic-inorganic hybrid material having a structure wherein a polymer is dispersed in a metal oxide (particularly MO$_2$ (M represents a metal atom))-containing three dimensional microstructural material (hereinafter abbreviated as microstructural material) is obtained from a composition for organic-inorganic hybrid material. The metal oxide (for example MO$_2$)-containing microstructural material is formed by hydrolysis and condensation by a sol-gel method of the metal alkoxide (A). An organic-inorganic hybrid material is formed wherein the fluorine-containing compound (B) and the reactive group-containing polymer (C) are dispersed in the metal oxide-containing microstructural material. The organic-inorganic hybrid material is suitable for the treatment agent for a textile, and at the same time has a superior stain block property, transparency and hydrophobic property. A copolymer obtained from the metal alkoxide (A) and a polymerizable monomer (D) may be dispersed in the microstructural material. The organic-inorganic hybrid material preferably contains no inorganic fillers of at least 1 μm long.

It is believed that elements within the microstructural material are coupled by covalent bond, and that the fluorine-containing compound (B) and the reactive group-containing polymer (C) have hydrogen bonds within the microstructural material. It is believed that the metal atom in the metal alkoxide is bonded to the polymerizable monomer by a covalent bond.

In the treatment agent of the present invention, there may be contained a polymerizable monomer (D) which is copolymerized with the metal alkoxide (A). The polymerizable monomer (D) maybe a monomer without a metal atom and/or a monomer with a metal atom. The polymerizable monomer (D) may be a radically polymerizable monomer. As examples of the monomer without metal atom (D1), methyl methacrylate, ethyl methacrylate, propyl methacrylate, n-butyl methacrylate, t-butyl methacrylate, phenyl methacrylate, methyl acrylate, ethyl acrylate, propyl acrylate, n-butyl acrylate, t-butyl acrylate and phenyl acrylate are mentioned. As example of a metal in the monomer with metal atom (D2), silicon is mentioned. As examples of the monomer with metal atom (D2), 3-trimethoxy silyl propyl methacrylate, triethoxy silyl amide propyl methacrylate, dimethylethoxy silyl methyl methacrylate and trimethoxy silyl acrylate are mentioned. The amount of the polymerizable monomer (D) may be from 0 to 200 parts by weight, for example, from 50 to 100 parts by weight, based on 100 parts by weight of the metal alkoxide (A) in the composition of the present invention.

The organic-inorganic hybrid material is formed from an organic component and an inorganic component. The organic component comprises the fluorine-containing compound (B), the reactive group-containing polymer (C) and the polymerizable monomer without metal atom (D1). As examples of the inorganic component, the metal alkoxide (A) and the polymerizable monomer with metal atom (D2) are mentioned.

A coated film of the organic-inorganic hybrid material is formed on a base material. The base material may be a polymer substance. The base material may be, for example, in the form of a film, a fiber and a cloth. The coated film of an organic-inorganic hybrid material may comprise a dense layer, and an uneven layer which is formed combinedly onto the dense layer wherein the whole surface is roughened with microscopic uneveness formed on the dense layer. Thickness of the coated film may be from 0.01 to 100 μm.

The Knoop hardness (KH) of the coated film formed from the organic-inorganic hybrid materials is at least 5.

The Knoop hardness, for example, maybe at least 6, in particular, at least 8. The Knoop hardness is measured by means of Terasawa type microhardness meter (SM-2 manufactured by Taiyo Tester Co., Ltd.).

The organic-inorganic hybrid material may have a contact angle of water of at least 100 degree.

The metal alkoxide (A), the fluorine-containing compound (B), the reactive group-containing polymer (C) and, if required, the polymerizable monomer (D) are hydrolyzed in an aqueous medium in the presence of a catalyst (for example, an acid or a base), and a hydrolysed product (that is, the organicinorganic hybrid material) is obtained. The hydrolysed product is dissolved or dispersed in a medium (water or organic solvent), then an initiator (if required, a crosslinking agent) is added to give a hybrid material/mediummixture. As examples of the organic solvent, alcohols (for example, methanol and ethanol), ethers (for example, benzoin methyl ether) and amides (for example, N,N-dimethylformamide) are mentioned. As examples of the initiator, photo initiators (for example, benzoin methyl ether), peroxides (for example, ammonium peroxodisulfate, ammonium persulfate) are mentioned. As examples of the crosslinking agent, bis-acrylamides (for example, N,N-methylene-bis-acrylamide) are mentioned. An emulsifier, a pH adjuster and the like may be employed in order to disperse the organic-inorganic hybrid material in water.

Any of the following emulsifiers may be employed;

for example, anionic surface active agents such as an alkyl sulfate ester salt, an alkyl aryl sulfate ester salt, an alkyl phosphate ester salt, a fatty acid salt;

cationic surface active agents such as a alkylamine salt and a quaternary alkyl amine salt;

nonionic surface active agents such as a polyoxyethylene alkyl ether, a polyoxyethylene alkyl aryl ether and a block-type polyether; and

ampholytic surface active agents such as a carboxylic acid type agent (for example, amino-acid type, betaine type, etc) and a sulfonic acid type agent. These emulsifiers may be employed independently or two or more of them may be employed in mixture.

In the case wherein the treatment agent contains an acidic group such as a carboxyl group or a carboxylic acid, it is preferable to adjust pH by adding at least one basic compound after condensation polymerization of the metal alkoxide (A), the fluorine-containing compound (B) having functional group reactive with the metal alkoxide and the reactive group-containing polymer (C) having reactive group reactive with substrate to be treated. In the case wherein the treatment agent has a basic group such as an amino group or an amine imide group, it is preferable to adjust pH by adding at least one acidic compound after condensation polymerization of the metal alkoxide (A), the fluorine-containing compound (B) having functional group reactive with the metal alkoxide and the reactive group-containing polymer (C) having reactive group reactive with substrate to be treated. In the case where the treatment agent has the above-mentioned acidic group and the above-mentioned basic group, the hydrophilic property of the resultant copolymer is enhanced, and the dispersibility of the polymer can be improved, by adjusting pH by way of adding at least one acidic compound or at least one basic compound depending on the content of these groups, after condensation polymerization of the metal alkoxide (A), the fluorine-containing compound (B) having functional group reactive with the metal alkoxide and the reactive group-containing polymer (C) having reactive group reactive with substrate to be treated.

As examples of the above-mentioned basic compound, amines such as ammonia, methylamine, dimethylamine, trimethylamine, ethyl amine, diethylamine, triethylamine, ethanolamine, diethanolamine, dimethyl amino ethanol; alkali metal hydroxides such as potassium hydroxide and sodium hydroxide are mentioned. In addition, as examples of the above-mentioned acidic compound, inorganic acid such as hydrochloric acid, phosphoric acid, sulphuric acid and nitric acid; and organic acids such as formic acid, acetic acid, propionic acid, lactic acid, oxalic acid, citric acid, adipic acid, (meth)acrylic acid, maleic acid, fumaric acid and itaconic acid are mentioned. The pH value adjusted may be usually from 6 to 10, more preferably from 7 to 10.

Although the aqueous medium in the aqueous dispersion essentially consists of water, in some cases an organic solvent such as alcohols may be contained up to approximately several percentage by weight.

In the present invention, it is preferable to employ the following metal chelate compound (E) and β-keto compound (F).

The metal chelate compound (E) comprises at least one metal chelate compound and/or partially hydrolysed compound thereof selected from the group consisting of the compounds represented by the following general formulas:

$Zr(OR^{31})_p(R^{32}COCHCOR^{33})_{4-p}$,
$Ti(OR^{31})_q(R^{32}COCHCOR^{33})_{4-q,}$, and
$Al(OR^{31})_r(R^{32}COCHCOR^{33})_{3-r}$

wherein $R^{31}$ and $R^{32}$ are, the same or different, an alkyl group having 1 to 6 carbon atoms, and $R^{33}$ is an alkyl group having 1 to 5 carbon atoms or an alkoxyl group having 1 to 16 carbon atoms.

It is believed that the metal chelate compound (E) performs a function of accelerating a condensation reaction during the condensation polymerization of the metal alkoxide (A), the fluorine-containing compound (B) having functional group reactive with the metal alkoxide and the reactive group-containing polymer (C) having reactive group reactive with the substrate to be treated.

In each of the formulas representing the metal chelate compound (E), the alkyl group $R^{31}$ and $R^{32}$ having 1 to 6 carbon atoms may be a linear or branched alkyl group such as a methyl group, an ethyl group, an n-propyl group, an isopropyl group, an n-butyl group, an isobutyl group, a sec-butyl group, a t-butyl group, an n-pentyl group and an n-hexyl group. For the $R^{33}$ group, the alkyl group having 1 to 5 carbon atoms may be a linear or branched alkyl group such as a methyl group, an ethyl group, an n-propyl group, an isopropyl group, an n-butyl group, an isobutyl group, a sec-butyl group, an t-butyl group, an n-pentyl group and an n-hexyl group, and the alkoxyl group having 1 to 16 carbon atoms may be a methoxy group, an ethoxy group, an n-propoxy group, an isopropoxy group, a n-butoxy group, an isobutoxy group, a sec-butoxy group, a t-butoxy group, a lauryl group and a stearyl group. In the case wherein the compound in each of the above-mentioned formulas has two or more of $R^{31}$, $R^{32}$ and/or $R^{33}$ groups, they may be the same or may be different from each other.

As examples of the metal chelate compound (E), zirconium chelate compounds such as zirconium tri-n-butoxy ethyl acetoacetate, zirconium di-n-butoxy bis(ethyl acetoacetate), zirconium n-butoxy tris(ethyl acetoacetate), zirconium tetrakis(n-propyl acetoacetate), zirconium tetrakis(acetyl acetoacetate) and zirconium tetrakis(ethyl acetoacetate); titanium chelate compounds such as titanium diisopropoxy bis(ethyl acetoacetate), titanium diisopropoxy bis(acetyl acetoacetate) and titanium diisopropoxy bis(acetyl acetate) ; aluminum chelate compounds such as aluminum diisopropoxy ethyl acetoacetate, aluminum diisopropoxy acetyl acetate, aluminum isoprpoxy bis(ethyl acetoacetate), aluminum isoprpoxy bis(acetyl acetate), aluminum tris(acetyl acetate), aluminum tris(ethyl acetoacetate) and aluminum monoacetylacetate bis(ethyl acetoacetate) are mentioned.

Among the above-mentioned metal chelate compounds (E), zirconium tri-n-butoxy ethyl acetoacetate, titanium diisopropoxy bis(acetyl acetate), aluminum diisopropoxy ethyl acetoacetate and aluminum tris(ethyl acetoacetate) are preferable. In the present invention, the metal chelate compound (E) may be employed independently or two or more of them may be employed in mixture.

The blending ratio of the metal chelate compound (E) is usually from 0.01 to 50 parts by weight, preferably from 0.1 to 50 parts by weight, more preferably from 0.5 to 10 parts by weight, based on 100 parts by weight of the metal alkoxide (A). Soil releasability is further improved by employing the metal chelate compound (E) by using the above-mentioned blending ratio.

The β-keto compound (F) comprises at least one compound selected from β-diketones and/or β-keto esters represented by the following general formula, and provides a function of storage stabilizer for the surface treatment agent of the present invention;

$$R^{42}COCH_2COR^{43}$$

wherein $R^{42}$ and $R^{43}$ are the same as $R^{32}$ and $R^{33}$ respectively in the above-mentioned each general formula representing the metal chelate compound (E).

In detail, it is believed that the β-keto compound coordinates with the metal atom in the metal chelate compound (E) when an aqueous dispersion is prepared and it suitably prevents the acceleration function of the metal chelate compound for the condensation reaction of the metal alkoxide (A), the fluorine-containing compound (B) having functional group reactive with metal alkoxide and the reactive group-containing polymer (C) having reactive group reactive with substrate to be treated, and at the same time it further stabilizes the resultant composition during storage.

As examples of the β-keto compound (F), acetylacetone, methyl acetoacetate, ethyl acetoacetate, n-propyl acetoacetate, isopropyl acetoacetate, n-butyl acetoacetate, isobutyl acetoacetate, sec-butyl acetoacetate, t-butyl acetoacetate, 2,4-hexanedione, 2,4-heptanedione, 3,5-heptanedione, 2,4-octanedione, 3,5-octanedione, 2,4-nonanedione, 3,5-nonanedione and 5-methyl-2,4-hexanedione are mentioned. Among above-mentioned β-keto compounds (F), acetylacetone and ethyl acetoacetate are preferable. In the present invention, the β-keto compound (F) may be employed independently or two or more of them may be employed in mixture. A blending ratio of β-keto compound (F) is at least 2 moles, preferably from 3 to 20 moles, more preferably from 4 to 15 moles, based on 1 mole of the metal chelate compound (E).

The aqueous dispersion of the surface treatment agent of the present invention may comprise the metal chelate compound (E) and the β-keto compound (F) and, if required, may comprise other additives. In detail, at least one colloidal silica and/or colloidal alumina (hereinafter collectively referred to as "colloidal additive (G)") may be added in order to improve a soil releasability of fiber. The above-mentioned colloidal silica is a dispersion wherein a high-purity silicic anhydride is dispersed in water and/or hydrophilic organic solvent. An average particle diameter of the colloidal silica is usually from 5 to 100 nm and preferably from 10 to 50 nm, and solid concentration is usually approximately from 10 to 40 % by weight.

As examples of the colloidal silica, Snow tex, methanol silica sol, isopropanol silica sol (manufactured by Nissan Chemical Industries, Ltd.) are mentioned. The above-mentioned colloidal alumina is an alumina sol in aqueous dispersion medium with pH of from 2.5 to 6 or an alumina sol in a hydrophilic organic solvent dispersion medium. The average particle diameter of the colloidal alumina is usually from 5 to 200 nm, preferably from 10 to 100 nm, and the solid concentration is usually approximately from 5 to 25 % by weight. As alumina, for example, synthetic alumina, boehmite and pseudo boehmite may be employed. Colloidal aluminas of this type are commercially available with trade names such as ALUMINA SOL-100, ALUMINA SOL-200, ALUMINA SOL-520 (manufactured by Nissan Chemical Industries, Ltd.). In the present invention, the colloidal additive (G) may be employed independently or two or more of them may be employed in mixture. A blending ratio of colloidal additive (G) is usually at most 30 parts by weight, preferably at most 20 parts by weight as solid content, based on 100 parts by weight of the treatment agent.

After the hybrid material/medium mixture is applied on the surface of a base material, a curing process may be applied. The curing may be performed by means of light (for example, UV irradiation) or heat (for example, application of heat of from 100 to 150 °C) etc.

An organic-inorganic hybrid materials of the present invention (the surface treatment agent) maybe applied to a base material (that is, a substrate to be treated) by a conventionally known method. The surface treatment agent is usually diluted with an organic solvent or water and deposited on the surface of the substrate to be treated (for example, carpet) by known methods such as a dipping application, a spray coating application and a foam coating application. If necessary, a carpet base fabric or a carpet yarn may be processed with steam before the application of the treatment agent. It may be applied along with a suitable crosslinking agent followed by curing. Other treatment agents such as water repellents and oil repellents, moth proofing agents, softening agents, antimicrobial agents, flame retardants, antistatic additives, coating fixing agents and crease resistant agents may be added to the surface treatment agent of the present invention and the resultant treatment reagent mixtures may be applied. In the case of the dipping application, a concentration of the organic-inorganic hybrid material in a dipping liquid may be from 0.05 to 30 % by weight. In the case of the spray application, the concentration of the organic-inorganic hybrid material in the treatment liquid may be from 0.1 to 5 % by weight.

The substrate to be treated with the surface treatment agent of the present invention may be a textile. It is especially preferable that the substrate is a carpet. Various examples may be mentioned as the textile. As examples of the textile, vegetable fibers and animal fibers such as cotton, hemp, sheep wool and silk, synthetic fibers such as polyamide, polyester, polyvinylalcohol, polyacrylonitrile, polyvinyl chloride and polypropylene, semi-synthetic fibers such as rayon and acetate, inorganic fibers such as fiberglass, carbon fiber and asbestos fiber or mixture of these above-mentioned fibers are mentioned. Superior resistance against a cleaning solvent and mechanical brushing of the present treatment agent enables the treatment agent of the present invention preferably to be applied for carpets of nylon and polypropylene.

The textile may be in any form such as a fiber, a thread or a cloth. In the case where the carpet is treated with the surface treatment agent of the present invention, the carpet may be manufactured from fibers or yarns after the fibers or the yarns were treated with the surface treatment agent. Alternatively, an already prepared carpet may be treated with the surface treatment agent.

As the substrate to be treated with the surface treatment agent of the present invention, glass, paper, wood, leather, fur, asbestos, brick, cement, metal, building stone, concrete, oxide, ceramics, plastics, painted surface and plaster may be mentioned, in addition to the textile.

The treatment agent for substrate to be treated, except the textile, (for example, wood, metal, stone, plastics, concrete, glass) may comprise the metal alkoxide, the fluorine-containing compound having functional group reactive with the metal alkoxide, and the reactive group-containing polymer having reactive group reactive with substrate to be treated.

For example, in the case that the treatment agent is used as a mold releasing agent and a resin adhesion inhibitor, a hard coated film having low surface free energy is formed on a surface of a metal. As a result, the mold releasability of the formed resin material from a mold is improved and the adhesion between the mold surface and the resin material is prevented, in addition to the impartation of water repellency and oil repellency.

EXAMPLES

The present invention will be illustrated hereinafter by showing Examples and Comparative Examples, but these example are not intended to be any limitation of the present invention.

The term "part" represents part by weight, unless specified.

The examinations were performed as follows.

Knoop hardness

A coated film of an organic-inorganic hybrid material (thickness: 1 μm) is formed on a glass plate. A Knoop hardness of the coated film is measured by Terasawa type microhardness meter (SM-2 manufactured by Taiyo Tester Co., Ltd.).

Water repellency

A little drop of isopropyl alcohol/water mixture liquid having the composition shown in Table I is gently placed on a surface of a carpet fabric. Water repellency is represented by a maximum content of isopropyl alcohol in the mixture liquid
wherein a drop shape is kept after three minutes.

Table I

| Mixture composition (volume ratio %) | |
|---|---|
| Isopropyl alcohol | Water |
| 60 | 40 |
| 50 | 50 |
| 40 | 60 |
| 30 | 70 |
| 20 | 80 |
| 10 | 90 |
| 0 | 100 |

Oil repellency

Oil repellency is evaluated by means of AATCC-TM-118-1966. Several drops (diameter 4 mm) of a test liquid shown in Table II are placed on 2 points of sample cloth. After 30 seconds, the drop penetration state of the drops is observed. The highest number of the oil repellency given by the examination liquid that does not exhibit the penetration is expressed as the oil repellency.

Table II

| Oil repellency | Test liquid | Surface tension (dynes/cm at 25 °C) |
|---|---|---|
| 8 | n-Heptane | 20.0 |
| 7 | n-Octane | 21.8 |
| 6 | n-Decane | 23.5 |
| 5 | n-Dodecane | 25.0 |
| 4 | n-Tetradecane | 26.7 |
| 3 | n-Hexadecane | 27.3 |
| 2 | Mixture liquid of 35 parts of hexadecane and 65 parts of nujol | 29.6 |
| 1 | Nujol | 31.2 |
| 0 | Inferior to 1 | --- |

Stain block (SB) property

The evaluation of the SB property was performed by the following method according to AATCC-TM-175-1993.
After the carpet fabric is cut into 11 cm × 11 cm pieces and kept to stand for at least 4 hours in a constant humidity thermostat (21 °C, 65% RH), the fabric is stained by soaking with a staining liquid containing an acid dye.
Specifically, a ring is placed with about 1 kg load on a treated surface of the carpet piece treated with a treatment agent. 20 ml of a staining liquid prepared in the way that 100 ± 1 mg of Red 40 is dissolved in 1 liter pure water followed by pH adjusting to pH 2.8 ±0.1 with citric acid is poured into this ring, and then a cup having about 2 kg load is urged to the stained area of the carpet piece five times. Then after the carpet piece is kept to stand in a constant humidity thermostat (21 °C, 65% RH) for 24 hours, the carpet piece is rinsed with running water until the rinse water is clear. The SB property is evaluated with a visual observation estimate by using a stain scale.

Soil releasability

Soil releasability of a carpet treated with a surface treatment agent is evaluated with the following method according to AATCC-TM-123-1995.

After the carpet fabric is cut into 5.5cm x 8cm pieces and kept to stand for 4 hours in a constant humidity thermostat (21 °C, 65% RH), the fabric is stained with dry soil which has the following composition and sufficiently dried.

Specifically, five pieces of the treated carpet are placed under the state that a back surface of each piece is attached to an internal of a ball mill so that the treated surface of the piece is upside. 0.031g of dry soil (dry soil was totally 6.82g for five pieces) and 50 ceramic balls (diameter of 2.0cm) are placed in the ball mill, per surface area $1cm^2$ of carpet piece. The ball mill is rotated with 80 rpm for 7 minutes 30 seconds, and the dry soil is adhered to the carpet piece surface uniformly.

The ball mill employed here is cylindrical, and has a inside bottom diameter of 12.0 cm and a height of 9.5 cm. Then excessive dry soil adhered to the surface is removed thoroughly with a home vacuum cleaner. A color difference ($\Delta E$) of the carpet surface is measured using a color-difference meter (MINOLTA CR-310), and a soil releasability ratio is calculated by the following equation.

$$\text{Soil releasability ratio (\%)} = 100 \times (\Delta E_N - \Delta E_{Tn}) / \Delta E_N$$

$\Delta E_N$: Color difference of untreated carpet after soil releasability evaluation

$\Delta E_{Tn}$: Color difference of carpet treated with surface treatment agent after soil releasability evaluation (n: number of cleaning)

The composition of the dry soil is as follows.

Table III

| Components | Weight ratio (%) |
|---|---|
| Peat moss | 38.4 |
| Cement | 18 |
| Kaolin | 18 |
| Silica | 18 |
| Carbon black | 1.15 |
| Ferric oxide (III) | 0.30 |
| Nujol | 6.25 |
| Lab value is L: from 25 to 31, a: from 2.3 to 2.6, b: from 4. 2 to 4. 8. | |

Fluorine residual ratio

Fluorine residual ratio of a carpet treated with a surface treatment agent is determined by the following method. Two hundred mg of carpet pieces before and after cleaning are collected and processed by an oxygen flask combustion method. $F^-$ (a fluorine ion) is absorbed in water which is absorption liquid. Then the amount of $F^-$ (fluorine ion) is calculated by a fluorine ion electrode method to give a fluorine residual ratio.

Cleaning method

The carpet fabric treated with the surface treatment agent is cleaned according to a method of AATCC-TM-138-1992, and it is cleaned. The details of the cleaning are as follows.

A surface of a carpet piece cut into 11cm $\times$ 11cm square is rinsed with running water at 50 °C for one minute and squeezed with mangles (pressure $5mg/cm^2$). The carpet piece is fixed on a sample pedestal of a cleaning testing machine (STAIN & CLEANING TESTER manufactured by Yoshida Seiki Seisakusyo Company) described in JIS L1023-1992 so that a rotating brush rubs the carpet pile. One percent sodium lauryl sulfate aqueous solution (SLS) (adjusted at pH 8 with NaOH aqueous solution) (5.6 ml) adjusted at 50 °C is poured onto a carpet piece with a pipet. The rotating brush and the sample pedestal are rotated and the carpet piece is cleaned. The operation wherein the sample pedestal rotates in regular direction five revolutions, in reverse direction five revolutions, in regular direction five revolutions, and then in reverse direction five revolutions (during the rotation of the sample pedestal rubbing by the rotating brush is continued) is defined as one set of cleaning.

In the cleaning test, the cleaning operation is repeated five sets without adding 1% aqueous SLS solution.

In addition, the sample pedestal rotates at 20 rpm, the brush rotates at 240 rpm, and vacuum and water spray nozzle of the cleaning testing machine are not employed.

The test carpet piece is thoroughly rinsed with running water at 50 °C, squeezed with mangles and dried in a hot-air drier at 105 °C for 30 minutes.

Synthesis Example 1

In a 100ml flask equipped with a stirrer, a thermometer and a dropping funnel, 15 parts of polymethacrylic acid (PMA) aqueous solution having a solid concentration of 0.5 % by weight and a pH value adjusted to pH 2.0 by adding 10 % by weight sulfamic acid aqueous solution (a stain blocking agent, FX-668F manufactured by 3M Company), 1.5 parts of heptadecafluoro-1,1,2,2-tetrahydrodecyl triethoxy silane $[CF_3(CF_2)_7CH_2CH_2\text{-Si }(OCH_2CH_3)_3]$ (a fluorine-containing compound) (manufactured by Shin-Etsu Chemical Co., Ltd.) and 5 parts of methyl methacrylate (MMA) were added into 15 parts of 3-methacryloxypropyl trimethoxy silane $[CH_2=CH(CH_3)\text{-}(C=O)\text{-}O\text{-}(CH_2)_3Si(OCH_3)_3]$ (TMSM) (manufactured by Shin-etsu Chemical Co., Ltd.) and 15 parts of tetraethoxysilane $[Si(OCH_2CH_3)_4]$ (TEOS) (manufactured by Shin-etsu Chemical Co., Ltd.). The mixture was stirred at room temperature for one hour and hydrolysis and condensation polymerization reactions were performed. Resultant compound was named Product 1.

Synthesis Example 2

The same procedure as in Synthesis Example 1 was followed to give Product 2 except that 1.5 parts of 2-(perfluoro octyl)ethanol $[F(CH_2)_8CH_2CH_2OH]$ was used instead of 1.5 parts of heptadecafluoro-1,1,2,2-tetrahydrodecyl triethoxy silane.

Comparative Synthesis Example 1

The same procedure as in Synthesis Example 1 was followed to give Product 3 except that 30 parts of methacrylic acid was used instead of 15 parts of 3-methacryloxypropyl trimethoxy silane and 15 parts of tetraethoxysilane.

Comparative Synthesis Example 2

The same procedure as in Synthesis Example 1 was followed to give Product 4 except that 1.5 parts of n-decyl triethoxy silane instead of 1.5 parts of heptadecafluoro-1,1,2,2-tetrahydrodecyltriethoxy silane, and 15 parts of a polymethyl methacrylate solution in acetone/water mixture having a solid concentration of 0.5 % by weight instead of 15 parts of polymethacrylic acid (PMA) aqueous solution having a solid concentration of 0.5 % by weight were used.

Preparative Example 1

Preparation of Product 1/MMA cross-linking precursor (Solution A)

Product 1 provided with Synthesis Example 1, methanol, benzoin methyl ether, N,N-methylene bis acrylamide were mixed in the amounts shown in Table A to give a Product 1/MMA cross-linking precursor (Solution A).

Preparative Example 2

Preparation of Product 2/MMA cross-linking precursor (Solution B)

The same procedure as in Preparative Example 1 was followed to give Product 2/MMA cross-linking precursor (Solution B) except that Product 2 was used instead of Product 1 used in the Preparative Example 1.

Preparative Example 3

Polymerization of Product 1/MMA copolymer (Solution C)

Product 1 provided with Synthesis Example 1 and N,N-dimethylformamide (DMF) were mixed in the amounts shown in Table A to give a mixture liquid.

After dissolved by heat, this mixture liquid was introduced into 1 liter 4 necked flask equipped with a reflux condenser, a nitrogen inlet pipe, a thermometer and a stirring device, and dissolved oxygen was removed by nitrogen replacement. Then ammonium persulfate (APS) as an initiator was introduced in the amount shown in Table A. While stirring, a copolymerization reaction was performed at 60 °C for 8 hours, and copolymer (Solution C) was obtained. A glass transition point of the copolymer was 110 °C.

Preparative Example 4

Polymerization of Product 2/MMA copolymer (Solution D)

The same procedure as in Preparative Example 3 was followed to give a copolymer (Solution D) except that Product 2 was used instead of Product 1 used in the Preparative Example 3. The glass transition point of the copolymer was 108 °C.

Preparative Example 5

Polymerization of Product 1/MMA copolymer (Emulsion A)

Product 1 provided with Synthesis Example 1, pure water, n-lauryl mercaptan (LSH), polyoxyethylenealkylphenylether ammonium sulfate (HITENOL N-17, an anionic emulsifier), polyoxyethylenealkylphenyl ether (NONION HS-220, a nonionic emulsifier), polyoxyethylene sorbitan monolaurate (NONION LT -221, a nonionic emulsifier), dipropyleneglycol monomethyl ether (DPM) were mixed in amounts shown in Table A, and mixture liquid was prepared.
After dissolved by heat, the mixture liquid was emulsified with an ultrasonic emulsifier to give an emulsion. The emulsion was introduced into a 1 liter 4 necked flask equipped with a reflux condenser, a nitrogen inlet pipe, a thermometer and a stirring device, and dissolved oxygen was removed by nitrogen replacement. Then ammonium persulfate as initiator (APS) was introduced in the amount shown in Table A. While stirring the copolymerization reaction was performed at 60 °C for 8 hours, and a copolymer (Emulsion A) was obtained. The glass transition point of the copolymer was 109 °C.

Preparative Example 6

Polymerization of Product 2/MMA copolymer (Emulsion B)

The same procedure as in Preparative Example 5 was followed to give a copolymer (Emulsion B) except that Product 2 was used instead of Product 1 used in the Preparative Example 5. The glass transition point of the copolymer was 108 °C.

Comparative Preparative Example 1

Preparation of Product 3/MMA cross-linking precursor (Solution E)

The same procedure as in Preparative Example 1 was followed to give Product 3/MMA cross-linking precursor (Solution E) except that Product 3 was used instead of Product 1 used in the Preparative Example 1.

Comparative Preparative Example 2

Preparation of Product 4/MMA cross-linking precursor (Solution F)

The same procedure as in Preparative Example 1 was followed to give Product 4/MMA cross-linking precursor (Solution F) except that Product 4 was used instead of Product 1 used in the Preparative Example 1.

Comparative Preparative Example 3

Polymerization of Product 3/MMA copolymer (Solution G)

The same procedure as in Preparative Example 3 was followed to give a copolymer (Solution G) except that Product 3 was used instead of Product 1 used in the Preparative Example 3. The glass transition point of the copolymer was 165 °C.

Comparative Preparative Example 4

Polymerization of Product 4/MMA copolymer (Solution H)

The same procedure as in Preparative Example 3 was followed to give a copolymer (Solution H) except that Product 4 was used instead of Product 1 used in the Preparative Example 3.

Comparative Preparative Example 5

Polymerization of Product 3/MMA copolymer (Emulsion C)

The same procedure as in Preparative Example 5 was followed to give a copolymer (Emulsion C) except that Product 3 was used instead of Product 1 used in the Preparative Example 5.

Comparative Preparative Example 6

Polymerization of Product 4/MMA copolymer (Emulsion D)

The same procedure as in Preparative Example 5 was followed to give a copolymer (Emulsion D) except that Product 4 was used instead of Product 1 used in the Preparative Example 5.
The type and the amount of materials employed in Preparative Examples 1 to 6 and in Comparative Preparative Examples 1 to 6 are shown in Table A.

Table A

| | Preparative Example | | | | | | Comparative Preparative Example | | | | | |
|---|---|---|---|---|---|---|---|---|---|---|---|---|
| | 1 | 2 | 3 | 4 | 5 | 6 | 1 | 2 | 3 | 4 | 5 | 6 |
| DPM | – | – | – | – | 30 | 30 | – | – | – | – | 30 | 30 |
| Pure water | – | – | – | – | 401.3 | 401.3 | – | – | – | – | 401.3 | 401.3 |
| LSH | – | – | – | – | 3 | 3 | – | – | – | – | 3 | 3 |
| N-17 | – | – | – | – | 4.5 | 4.5 | – | – | – | – | 4.5 | 4.5 |
| HS-220 | – | – | – | – | 6 | 6 | – | – | – | – | 6 | 6 |
| LT-221 | – | – | – | – | 4.5 | 4.5 | – | – | – | – | 4.5 | 4.5 |
| APS | – | – | 0.75 | 0.75 | 0.75 | 0.75 | – | – | 0.75 | 0.75 | 0.75 | 0.75 |
| Product 1 | 90 | – | 90 | – | 90 | – | – | – | – | – | – | – |
| Product 2 | – | 90 | – | 90 | – | 90 | – | – | – | – | 90 | – |
| Product 3 | – | – | – | – | – | – | 90 | – | 90 | – | – | – |
| Product 4 | – | – | – | – | – | – | – | 90 | – | 90 | – | 90 |
| DMF | – | – | 450 | 450 | – | – | – | – | 450 | 450 | – | – |
| Methanol | 450 | 450 | – | – | – | – | 450 | 450 | – | – | – | – |
| Benzoin methyl ether | 0.75 | 0.75 | – | – | – | – | 0.75 | 0.75 | – | – | – | – |
| Methylene bis acrylamide | 4 | 4 | – | – | – | – | 4 | 4 | – | – | – | – |

Example 1

Solution A prepared in Preparative Example 1 was diluted with methanol to give a treatment liquid having a solid content of 3 % by weight.

The treatment liquid obtained above was sprayed onto a nylon pile carpet fabric (a blue unbacked product) to give a fluorine concentration of 400 ppm, and then the fabric was exposed to UV light with an ultra high-pressure mercury-vapor lamp for 10 minutes. Compounds included within solid content in the treatment liquid are shown in Table B. Water repellency, oil repellency, stain block property and soil releasability were evaluated for the samples before and after cleaning.

On the other hand, a coated film was formed on the glass plate top with the treatment liquid. Knoop hardness of the coated film was measured.

Results are shown in Table C.

Example 2

Solution B prepared in Preparative Example 2 was diluted with methanol to give a treatment liquid having a solid content of 3 % by weight. This treatment liquid was evaluated as in Example 1.

Results are shown in Table C.

Example 3

Solution C prepared in Preparative Example 3 was diluted with N,N-dimethylformamide (DMF) to give a treatment liquid having a solid content of 3 % by weight. The treatment liquid obtained above was sprayed onto a nylon pile carpet fabric (a blue unbacked product) to give a fluorine concentration of 400 ppm, and then the fabric was heated and dried at 130 °C for 10 minutes. Water repellency, oil repellency, stain block property and soil releasability were evaluated for the samples before and after cleaning. On the other hand, Knoop hardness of a coated film formed from the treatment liquid was measured.

Results are shown in Table C.

Example 4

The Solution D prepared in Preparative Example 4 was diluted with N,N-dimethylformamide (DMF) to give a treatment. liquid having a solid content of 3 % by weight. This treatment liquid was evaluated as in Example 3.

Results are shown in Table C.

Example 5

The Emulsion A prepared in Preparative Example 5 was diluted with pure water to give a treatment liquid having a solid content of 3 % by weight. The treatment liquid obtained above was sprayed onto a nylon pile carpet fabric (a blue unbacked product) to give a fluorine concentration of 400 ppm, and then the fabric was heated and dried at 130 °C for 10 minutes. Water repellency, oil repellency, stain block property and soil releasability were evaluated for the samples before and after cleaning.

On the other hand, Knoop hardness of a coated film formed from the treatment liquid was measured.

Results are shown in Table C.

Example 6

The Emulsion B prepared in Preparative Example 6 was diluted with pure water to give a treatment liquid having a solid content of 3 % by weight. This treatment liquid was evaluated as in Example 5.

Results are shown in Table C.

Comparative Examples 1 and 2

Each solution prepared in Comparative Preparative Examples 1 and 2 was diluted with methanol to give a treatment liquid having a solid content of 3 % by weight. These solutions were evaluated as in Example 1.

Results are shown in Table C.

Comparative Examples 3 and 4

Each solution prepared in Comparative Preparative Examples 3 and 4 was diluted with N,N-dimethylformamide (DMF) to give a treatment liquids having a solid content of 3 % by weight. These solutions were evaluated as in Example 3.
Results are shown in Table C.

Comparative Examples 5 and 6

Each emulsion prepared in Comparative Preparative Examples 5 and 6 was diluted with pure water to give a treatment liquids having a solid content of 3 % by weight. These solutions were evaluated as in Example 5.
Results are shown in Table C.

Table B

| | | Example | | | | | | Comparative Example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Inorganic component | TMSM | O | O | O | O | O | O | - | O | - | O | - | O |
| | TEOS | O | O | O | O | O | O | - | O | - | O | - | O |
| Organic component | PMA | O | O | O | O | O | O | O | - | O | - | O | - |
| | Fluorine-containing compound | O | O | O | O | O | O | O | - | O | - | O | - |
| | MMA | O | O | O | O | O | O | O | O | O | O | O | O |
| Crosslinking agent | | O | O | - | - | - | - | O | O | - | - | - | - |
| Emulsifier | | - | - | - | - | O | O | - | - | - | - | O | O |

EP 1 167 616 A1

Table C

| | | Example | | | | | | Comparative Example | | | | | |
|---|---|---|---|---|---|---|---|---|---|---|---|---|---|
| | | 1 | 2 | 3 | 4 | 5 | 6 | 1 | 2 | 3 | 4 | 5 | 6 |
| Before cleaning | Water repellency | 50 | 50 | 50 | 50 | 50 | 50 | 30 | 0 | 30 | 0 | 30 | 0 |
| | Oil repellency | 3 | 3 | 3 | 3 | 3 | 3 | 2 | 0 | 2 | 0 | 2 | 0 |
| | SB property | 10 | 10 | 10 | 10 | 10 | 10 | 10 | 3 | 10 | 3 | 10 | 3 |
| | Soil releasability (%) | 80 | 80 | 77 | 77 | 77 | 77 | 43 | 29 | 37 | 20 | 37 | 20 |
| After cleaning (5 times cleaning) | Water repellency | 50 | 50 | 50 | 50 | 50 | 50 | 0 | 0 | 0 | 0 | 0 | 0 |
| | Oil repellency | 3 | 3 | 3 | 3 | 3 | 3 | 0 | 0 | 0 | 0 | 0 | 0 |
| | SB property | 10 | 10 | 10 | 10 | 10 | 10 | 10 | 0 | 10 | 0 | 10 | 0 |
| | Soil releasability (%) | 77 | 77 | 74 | 74 | 74 | 74 | 14 | 0 | 14 | 0 | 14 | 0 |
| | Fluorine residual ratio (%) | 95 | 95 | 95 | 95 | 95 | 95 | 5 | — | 5 | — | 5 | — |
| Knoop hardness | | 33 | 33 | 30 | 30 | 28 | 28 | 22 | 33 | 10 | 30 | 10 | 29 |

ADVANTAGES OF THE INVENTION

According to the present invention a surface treatment agent comprising an organic-inorganic hybrid material which imparts a durability maintaining sufficient water repellency, oil repellency, stain block property and soil releasability . before and after cleaning.

**Claims**

1.  A surface treatment agent, wherein, when a fiber for carpet . is treated with the surface treatment agent, the treated fiber has following characteristics (1) and (2):

    (1) a stain block property of at least 8, in a stain block examination according to AATCC-TM-175-1993; and
    (2) a Knoop hardness (KH) of the surface treatment agent of at least 5.

2.  A surface treatment agent comprising:

    (A) a metal alkoxide;
    (B) a fluorine-containing compound containing a functional group reactive with the metal alkoxide; and
    (C) a reactive group-containing polymer having a reactive group reactive with a substrate to be treated.

3.  The surface treatment agent according to Claim 2, wherein a number of alkoxy groups in the metal alkoxide is from 1 to 12.

4.  The surface treatment agent according to Claim 2, wherein a metal in the metal alkoxide (A) is selected from the group consisting of Si, Ti, Al, Zr, Sn and Fe.

5.  The surface treatment agent according to Claim 2, wherein the functional group in the fluorine-containing compound (B) is a reactive group selected from the group consisting of a carboxyl group or salt thereof, a sulfonic acid group or salt thereof, a hydroxy group, an epoxy group, a phosphoric group, an alkoxy silane group, a halogenated silyl group, an isocyanate group and a blocked isocyanate group.

6.  The surface treatment agent according to Claim 2, wherein the reactive groups in the reactive group-containing polymer (C) are the reactive groups selected from the group consisting of a carboxyl group or a salt thereof, a hydroxy group, an epoxy group, a phosphoric group, an alkoxy silane group, an imine group, a sulfonic group, an amino group, an isocyanate group and a blocked isocyanate group.

7.  The surface treatment agent according to Claim 2, wherein the reactive group-containing polymer (C) is a polymer having:

    (i) a reactive group selected from the group consisting of a carboxyl group or a salt thereof, a hydroxy group, an epoxy group, a phosphoric group, an alkoxysilane group, an imine group, a sulfonic group, an amino group, an isocyanate group and a blocked isocyanate group; and
    (ii) a fluoroalkyl group.

8.  The surface treatment agent according to Claim 2, wherein the substrate to be treated is one selected from the group consisting of wood, metal, stone, plastics, concrete and glass.

9.  An organic-inorganic hybrid material comprising:

    (A) a metal alkoxide,
    (B) a fluorine-containing compound having a functional group reactive with the metal alkoxide; and
    (C) a reactive group-containing polymer having a reactive group reactive with a substrate to be treated.

## INTERNATIONAL SEARCH REPORT

| International application No. |
|---|
| PCT/JP00/01170 |

A. CLASSIFICATION OF SUBJECT MATTER
   Int.Cl⁷   D06M13/144

According to International Patent Classification (IPC) or to both national classification and IPC

B. FIELDS SEARCHED

Minimum documentation searched (classification system followed by classification symbols)
   Int.Cl⁷   D06M13/144, C09K3/18

Documentation searched other than minimum documentation to the extent that such documents are included in the fields searched

Electronic data base consulted during the international search (name of data base and, where practicable, search terms used)
   WPI/L

C. DOCUMENTS CONSIDERED TO BE RELEVANT

| Category* | Citation of document, with indication, where appropriate, of the relevant passages | Relevant to claim No. |
|---|---|---|
| A | JP, 7-157335, A (Toyota Motor Corporation et al.), 20 June, 1995 (20.06.95), Full text   (Family: none) | 1-9 |
| A | JP, 7-257942, A (AISIN SEIKI CO., LTD. et al.), 09 October, 1995 (09.10.95), Full text   (Family: none) | 1-9 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 April, 2000 (19.04.00) | 02.05.00 |

| Name and mailing address of the ISA/ | Authorized officer |
|---|---|
| Japanese Patent Office | |
| Facsimile No. | Telephone No. |

Form PCT/ISA/210 (second sheet) (July 1992)